# EUROPEAN PATENT APPLICATION

(11) **EP 3 119 099 A1**
(43) Date of publication of application: **18.01.2017**
(21) Application number: 14885710.5
(22) Date of filing: 04.06.2014
(51) Int. Cl.: H04N 21/433

(54) **METHOD AND SYSTEM FOR ACCESSING TELEVISION PROGRAM AND APPLICATION BY INTELLIGENT TELEVISION**

(30) Priority: 11.03.2014 CN 201410087163
(71) Applicant: Huizhou TCL Mobile Communication Co., Ltd., Huizhou, Guangdong 516006 (CN)
(72) Inventor: ZHENG, Yu, Hui Zhou Guangdong 516006 (CN)
(74) Representative: Brachmann, Roland W.
(86) International application number: PCT/CN2014/079128
(87) International publication number: WO 2015/135260

(57) **Abstract**

Disclosed are a method and system for accessing a television program and an application by an intelligent television. The method comprises the following steps: A: receiving a channel selection instruction of a user, and determining, according to the instruction, an index number corresponding to a channel selected by the user; B: searching for a program resource or an application corresponding to the determined index number according to a preset index table; and C: starting and displaying a found program resource or application. The system for accessing a television program and an application by an intelligent television in the present invention changes the channel management mode of traditional intelligent televisions, set top boxes or other systems, so that the television programs and the applications can be displayed at the same time and can be conveniently invoked, the user can conveniently perform switching between the programs and the applications without performing switching between the program channels and application interfaces, thereby reducing the operation complexity, simplifying operations, and helping the aged and children conveniently use the intelligent television.

## Description

### Field of the Invention

The present invention relates to the field of smart TV, and in particular relates to a method and a system for accessing TV programs and applications on a smart TV.

### Description of the Related Art

As relevant technologies grow increasingly mature, smart TV has become more and more popular. There are more and more associated products capable of achieving smart TV functions, such as set-top boxes, multimedia boxes and family gateways. As a result, it is very easy to change a regular TV to a smart TV or similar device.

In addition, cloud computing is gradually going into regular people's family lives. Big data and data mining have made it possible for TVs to provide contents like personalized videos and games, and individual customization has become a tendency of the development of mobile internet content services.

Currently, all smart TVs typically comprise two parts, the above conventional TV programs and applications, which usually require the employment of two different management systems to manage TV programs and applications, respectively, leading to issues for users. For example, when a user needs to change from a TV program to an application, she needs to first change to the application interface, and then look for the desired application, making it very inconvenient. Moreover, the above complex operations are not suitable for elderly people or children.

Therefore, the prior art is still in need of improvement and development.

### Summary of the Invention

In light of the above drawbacks of the prior art, the object of the present invention is to provide a method and a system for accessing TV programs and applications on a smart TV with the intention to solve the problem of inconvenient operations as a result of existing smart TVs displaying TV programs and applications on separate interfaces.

The technical solution according to the present invention is as follows:
A method for accessing TV programs and applications on a smart TV, wherein the method comprises the following steps of:
   A. Receiving a channel selection command from a user, and determining the index number corresponding to the channel selected by the user according to the command;
   B. Searching for a program resource or an application corresponding to the determined index number through a preset index table;
   C. Starting and displaying the identified program resource or application.

The method for accessing TV programs and applications on a smart TV, wherein the index table contains the one-to-one correspondence between an index number and the information associated with each program resource and the one-to-one correspondence between an index number and the information associated with each application.

The method for accessing TV programs and applications on a smart TV, wherein the information associated with program resources comprises channel identification, channel number and channel auxiliary information, wherein the channel identification is label information or key recognition technical parameter of each program channel by the system, the channel number is an identification information code designated by the system to a program channel, and the channel auxiliary information comprises channel name, channel description information and channel content prompt information.

The method for accessing TV programs and applications on a smart TV, wherein the information associated with applications comprises application name and application calling parameter.

The method for accessing TV programs and applications on a smart TV, wherein, prior to Step A, it further comprises: presetting an index table.

The method for accessing TV programs and applications on a smart TV, wherein the presetting an index table specifically comprises: acquiring program resources and associated information thereof, identifying applications installed in the system and associated information thereof, and establishing one-to-one correspondences between associated information of program resources, as well as associated information of applications, and index numbers to form an index table.

The method for accessing TV programs and applications on a smart TV, wherein associated information of program resources and applications in the current system is acquired regularly, the acquired associated information is compared with the corresponding content in the index table, and if they are inconsistent according to the comparison, the associated information of program resources or applications is updated into the index table.

The method for accessing TV programs and applications on a smart TV, wherein Step B specifically comprises:
Looking for the associated information of a program resource corresponding to the determined index number through the index table, and positioning to the program channel corresponding to the program resource using the associated information;
looking for the associated information of an application corresponding to the determined index number through the index table, and positioning to the application using the associated information.

A system for accessing TV programs and applications on a smart TV, wherein the system comprises:
A command receiving module for receiving a channel selection command from a user;
A channel management module for determining the index number corresponding to the channel selected by the user according to the command received by the command receiving module, searching for a program resource or an application corresponding to the determined index number through a preset index table, and starting and displaying the identified program resource;

An application management module for starting and displaying the application identified by the channel management module.

The system for accessing TV programs and applications on a smart TV, wherein the system further comprises an index table setting module for presetting an index table.

Advantageous effects: the present invention provides a method and a system for accessing TV programs and applications on a smart TV, the system changes the channel management mode of conventional systems of smart TVs and set-top boxes, such that the information of TV programs and applications can be displayed together and called conveniently, a user can conveniently and rapidly switch between programs and applications without the need to switch between TV channel and application interfaces, which reduces the operation complexity, simplifies operations, and facilitates the use of smart TV by elderly people and children.

### Brief Description of the Drawings

- Fig.1: is a flow chart of the method for accessing TV programs and applications on a smart TV in a specific embodiment of the present invention.
- Fig.2: is a principle block diagram of the system for accessing TV programs and applications on a smart TV in a specific embodiment of the present invention.
- Fig.3: is a flow chart of the method for creating and applying the index table according to the present invention.

### Detailed Description of the Embodiments

The present invention provides a method and a system for accessing TV programs and applications on a smart TV. To make the object, technical solution and effect of the present invention clearer and more specific, the present invention will be further described in detail below. It should be understood that the specific embodiments herein are only used to describe the present invention, rather than to limit the present invention.

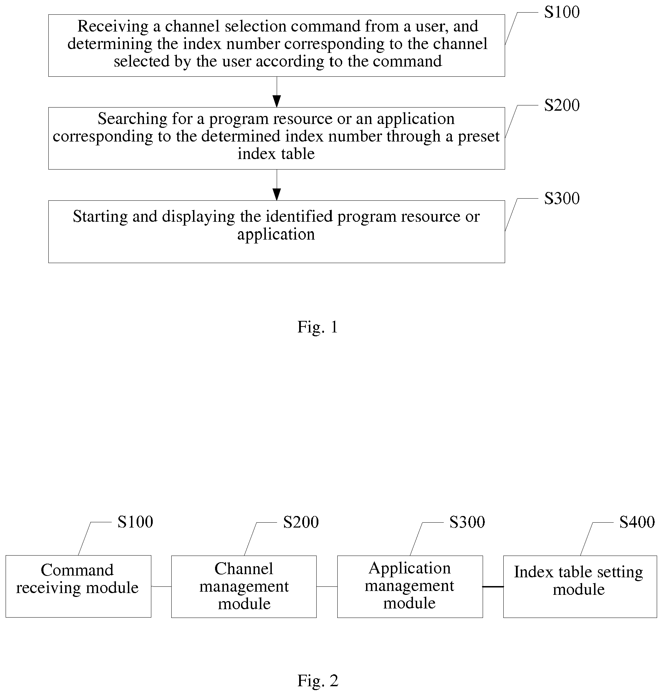

A method and a system for accessing TV programs and applications on a smart TV are shown in Fig.1, wherein the method comprises the following steps of:
S100. Receiving a channel selection command from a user, and determining the index number corresponding to the channel selected by the user according to the command.

The channel selection command from a user means a corresponding key value signal received by the system after the user operates a remote control or remote control software. Of course, the user may access a TV program and application by directly inputting a channel number. The "channel" herein refers to the identification information capable of directly accessing the corresponding program content or application function.

The correspondence between key values and index numbers is preset in the system, and when the system receives the channel selection key value, it can directly determine the corresponding index number according to the correspondence.

S200. Searching for a program resource or an application corresponding to the determined index number through a preset index table.

Wherein the index table contains the one-to-one correspondence between an index number and the information associated with each program resource and the one-to-one correspondence between an index number and the information associated with each application. Furthermore, the information associated with program resources comprises channel identification, channel number and channel auxiliary information, and may further comprise the information of another channels that can be dynamically updated, wherein the channel identification is label information or key recognition technical parameter of each program channel by the system (e.g. a radio TV, IP TV and set-top box system), the channel number is an identification information code designated by the system to a program channel, and the channel auxiliary information comprises channel name, channel description information and channel content prompt information. In addition, the channel auxiliary information may further comprise other technical information necessary for describing the corresponding TV program channel.

The information associated with applications comprises application name and application calling parameter. The application name is the application registration information required by the system to execute the application during running, and specifically may comprise application calling entry point, type name, registered name of the program, and program file name. The application calling parameter refers to the parameter information necessary for implementing the start or calling of an application. In addition, the information associated with applications may further comprise parameters such as the program history calling information, program running state, program home subscriber, program multi-access authority or attribute, and program limiting conditions, etc.

Each item in the index table comprises at least one index number and the associated information having correspondence with the index number, the associated information is either information associated with a program resource or information associated with an application. The index number may either be displayed on a user interface to end users, or be referenced and operated by end users via a menu, remote control or similar accessory, remote control program, machine button, etc.

In a preferred embodiment, prior to Step S100, it further comprises: presetting an index table, which specifically comprises: acquiring program resources and associated information thereof, identifying applications installed in the system and associated information thereof, and establishing one-to-one correspondences between associated information of program resources, as well as associated information of applications, and index numbers to form an index table. Namely, acquiring channel information of program resources and other associated information of the program resources from software and hardware components of systems of conventional TV, radio TV and IP TV, managing this type of information, for example, sorting the acquired program resources according to the amount of views, forming a file with the sorted contents for local storage, and making revisions on corresponding file contents according to user defined revisions or updates of the program resources.

In a preferred embodiment, Step S200 specifically comprises:
Looking for the associated information of a program resource corresponding to the determined index number through the index table, and positioning to the program channel corresponding to the program resource using the associated information;
looking for the associated information of an application corresponding to the determined index number through the index table, and positioning to the application using the associated information.

In a specific embodiment, a system may regularly acquire associated information of program resources and applications in the current system, compare the acquired associated information with the corresponding content in the index table, and if they are inconsistent according to the comparison, update the associated information of program resources or applications into the index table. In such a way, it ensures that all contents in the associated information items of an index table are the latest information.

In another preferred embodiment, when a new application is installed in the system, the system may acquire associated information of the application on its own, automatically add the new application into the index table, and assign a corresponding index number to the new item.

S300. Starting and displaying the identified program resource or application.

A system for accessing TV programs and applications on a smart TV is shown in Fig.2, wherein the system comprises:
A command receiving module 100 for receiving a channel selection command from a user, as shown specifically in Step S100;
A channel management module 200 for determining the index number corresponding to the channel selected by the user according to the command received by the command receiving module, searching for a program resource or an application corresponding to the determined index number through a preset index table, and starting and displaying the identified program resource, as shown specifically in Steps S200 and S300.

Integrate the associated information of program channels with associated information of applications for management, receive inquiries and requests from other components of the apparatus or software, and confirm if the requested object is an operation associated with a conventional program channel or an application based on the records of the managed information

An application management module 300 for starting and displaying the application identified by the channel management module, specifically, the application management module is in charge of the calling of applications to be run on an apparatus and communications between the applications and components of all software or hardware in the apparatus and/or operating system, and it is a module for communicative connection, as shown specifically in Step S300.

Preferably, the system further comprises an index table setting module 400 for presetting an index table.

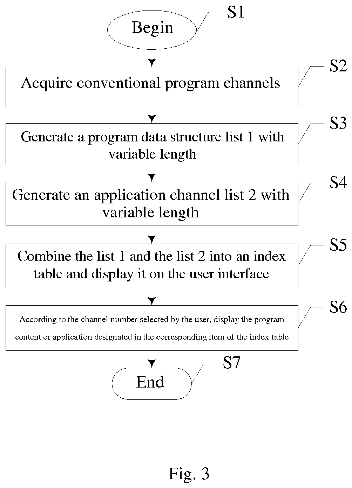

As shown in Fig.3, specific steps of creating and applying the index table according to the present invention are as follows:
S1. Begin.
S2. Acquire conventional program channels. The channel management module acquires channel information of program resources and other associated information of the program resources from software and hardware components of systems of conventional TV, radio TV and IP TV (i.e. acquiring associated information of the program resources).
S3. Generate a program data structure list 1 with variable length. Go through the acquired associated information of the program resources, organize them into channel identification, channel number and channel auxiliary information, form the program data structure list 1 with variable length using the above associated information, the "variable length" means that the list 1 may perform real time updating actions such as content addition and replacement.
S4. Generate an application channel list 2 with variable length. The channel management module acquires from the application management module information associated with all available applications and methods for calling the applications collected from the apparatus or system (i.e. the associated information of the applications), and form the application channel list 2 using the above information.
S5. Combine the list 1 and the list 2 into an index table, and display it on the user interface.

The channel management module maintains a list of mixed data structure items (i.e. the index table) that mixes and arranges items from the program data structure list 1 and the application channel list 2. Each item in the table comprises at least one index number and one item of associated information representing either a program resource or an application. The above index number may either be displayed on a user interface to end users, or be referenced and operated by end users via a menu, remote control or similar accessory, remote control program, machine button, etc. Channel selections by a user can be responded to well through the correspondence between index numbers and items associated with program resources and applications.

S6. According to the channel number selected by the user, display the program content or application designated in the corresponding item of the index table. When the user inputs the channel number (channel code) by means of a remote control, remote control software, etc., the channel management module identifies an item corresponding to the index number bundled with the channel number in the index table by inquiring the index table, and the item correspondingly stores the item of associated information of a specific program resource, or the item of associated information of a specific application. According to the above inquiry result, if it is an item of the associated information of a program resource, position to the specific program channel using the item content, and display the corresponding program content to the user; if it is an item of the associated information of an application, position to the application and the application calling parameter using the item, and run or call the application by the application management module according to the application and the application calling parameter recorded in the item. S7. End.

The present invention provides a method and a system for accessing TV programs and applications on a smart TV, the system changes the channel management mode of conventional systems of smart TVs and set-top boxes, such that the information of TV programs and applications can be displayed together and called conveniently, a user can conveniently and rapidly switch between programs and applications without the need to switch between TV channel and application interfaces, which reduces the operation complexity, simplifies operations, and facilitates the use of smart TV by elderly people and children.

It should be understood that applications of the present invention are not limited to the above examples. To those skilled in the art, improvements or modifications may be made according to the above description, and all of these improvements or modifications shall be encompassed by the appended claims of the present invention.

## Claims

1. A method for accessing TV programs and applications on a smart TV, **characterized in that** the method comprises the following steps of:
A. Receiving a channel selection command from a user, and determining the index number corresponding to the channel selected by the user according to the command;
B. Searching for a program resource or an application corresponding to the determined index number through a preset index table;
C. Starting and displaying the identified program resource or application.

2. The method for accessing TV programs and applications on a smart TV according to Claim 1, **characterized in that** the information associated with program resources comprises channel identification, channel number and channel auxiliary information, wherein the channel identification is label information or key recognition technical parameter of each program channel by the system, the channel number is an identification information code designated by the system to a program channel, and the channel auxiliary information comprises channel name, channel description information and channel content prompt information.

3. The method for accessing TV programs and applications on a smart TV according to Claim 1, **characterized in that** the information associated with applications comprises application name and application calling parameter.

4. The method for accessing TV programs and applications on a smart TV according to Claim 1, **characterized in that** the application name is the application registration information required in the system to execute the application during running, and specifically comprises application calling entry point, type name, registered name of the program, and program file name.

5. The method for accessing TV programs and applications on a smart TV according to Claim 1, **characterized in that**, prior to Step A, it further comprises:
presetting an index table.

6. The method for accessing TV programs and applications on a smart TV according to Claim 5, **characterized in that** the presetting an index table specifically comprises: acquiring program resources and associated information thereof, identifying applications installed in the system and associated information thereof, and establishing one-to-one correspondences between associated information of program resources, as well as associated information of applications, and index numbers to form an index table.

7. The method for accessing TV programs and applications on a smart TV according to Claim 1, **characterized in that** associated information of program resources and applications in the current system is acquired regularly, the acquired associated information is compared with the corresponding content in the index table, and if they are inconsistent according to the comparison, the associated information of program resources or applications is updated into the index table.

8. The method for accessing TV programs and applications on a smart TV according to Claim 1, **characterized in that** Step B specifically comprises:
- Looking for the associated information of a program resource corresponding to the determined index number through the index table, and positioning to the program channel corresponding to the program resource using the associated information; looking for the associated information of an application corresponding to the determined index number through the index table, and positioning to the application using the associated information.

9. A method for accessing TV programs and applications on a smart TV, **characterized in that** the method comprises the following steps of:
A. Receiving a channel selection command from a user, and determining the index number corresponding to the channel selected by the user according to the command;
B. Searching for a program resource or an application corresponding to the determined index number through a preset index table;
C. Starting and displaying the identified program resource or application.
The index table contains the one-to-one correspondence between an index number and the information associated with each program resource and the one-to-one correspondence between an index number and the information associated with each application.

10. The method for accessing TV programs and applications on a smart TV according to Claim 9, **characterized in that** the information associated with program resources comprises channel identification, channel number and channel auxiliary information, wherein the channel identification is label information or key recognition technical parameter of each program channel by the system, the channel number is an identification information code designated by the system to a program channel, and the channel auxiliary information comprises channel name, channel description information and channel content prompt information.

11. The method for accessing TV programs and applications on a smart TV according to Claim 9, **characterized in that** the information associated with applications comprises application name and application calling parameter.

12. The method for accessing TV programs and applications on a smart TV according to Claim 9, **characterized in that** the application name is the application registration information required in the system to execute the application during running, and specifically comprises application calling entry point, type name, registered name of the program, and program file name.

13. The method for accessing TV programs and applications on a smart TV according to Claim 9, **characterized in that**, prior to Step A, it further comprises:
presetting an index table.

14. The method for accessing TV programs and applications on a smart TV according to Claim 13, **characterized in that** the presetting an index table specifically comprises: acquiring program resources and associated information thereof, identifying applications installed in the system and associated information thereof, and establishing one-to-one correspondences between associated information of program resources, as well as associated information of applications, and index numbers to form an index table.

15. The method for accessing TV programs and applications on a smart TV according to Claim 9, **characterized in that** associated information of program resources and applications in the current system is acquired regularly, the acquired associated information is compared with the corresponding content in the index table, and if they are inconsistent according to the comparison, the associated information of program resources or applications is updated into the index table.

16. The method for accessing TV programs and applications on a smart TV according to Claim 9, **characterized in that** Step B specifically comprises:
- Looking for the associated information of a program resource corresponding to the determined index number through the index table, and positioning to the program channel corresponding to the program resource using the associated information; looking for the associated information of an application corresponding to the determined index number through the index table, and positioning to the application using the associated information.

17. A system for accessing TV programs and applications on a smart TV, **characterized in that** the system comprises:
- A command receiving module for receiving a channel selection command from a user;
- A channel management module for determining the index number corresponding to the channel selected by the user according to the command received by the command receiving module, searching for a program resource or an application corresponding to the determined index number through a preset index table, and starting and displaying the identified program resource;
- An application management module for starting and displaying the application identified by the channel management module.

18. The system for accessing TV programs and applications on a smart TV according to Claim 17, **characterized in that** the system further comprises an index table setting module for presetting an index table.
